# EUROPEAN PATENT APPLICATION

(11) **EP 4 787 674 A1**
(43) Date of publication of application: **05.08.2026**
(21) Application number: 26152029.0
(22) Date of filing: 15.01.2026
(51) Int. Cl.: H02K 1/30, H02K 15/025, H02K 15/03, H02K 15/50

(54) **ROTARY ELECTRIC MACHINE ROTOR AND METHOD OF MANUFACTURING ROTARY ELECTRIC MACHINE ROTOR**

(30) Priority: 29.01.2025 JP 2025013214
(71) Applicant: AISIN CORPORATION, Aichi 448-8650 (JP)
(72) Inventor: Adachi, Akifumi, Aichi, 448-8650 (JP)
(74) Representative: Kramer Barske Schmidtchen Patentanwälte PartG mbB

(57) **Abstract**

A rotary electric machine rotor (R) includes a rotor core (Rc) including a stack of a plurality of core sheets (1) each having a shaft hole (2) at a center; a shaft (6) inserted through the shaft holes (2); and an adapter (10) disposed between the shaft (6) and the rotor core (Rc) and engaged with both the shaft (6) and the rotor core (Rc). In the rotor (R), the plurality of core sheets (1) stacked have, on an inner peripheral surface of the core sheets (1), an engagement portion (C) extending from one end side to the other end side in an axial direction of the shaft (6); the adapter (10) has, on an outer peripheral surface of the adapter (10), a guide portion (11) extending from one end side to the other end side in the axial direction of the shaft (6); one of the engagement portion (C) and the guide portion (11) is an engagement recessed portion (11a) recessed along a radial direction of the shaft (6), and the other is an engagement protruding portion (3) protruding along the radial direction of the shaft (6) and engaged with the engagement recessed portion (11a); the engagement recessed portion (11a) and the engagement protruding portion (3) have a shape twisted at a predetermined twist angle (θ) along a circumferential direction of the shaft (6), and the adapter (10) is engaged with the shaft (6) detachably from the shaft (6) along the axial direction of the shaft (6).

## Description

### TECHNICAL FIELD

The present disclosure relates to a rotary electric machine rotor and a method of manufacturing a rotary electric machine rotor.

### BACKGROUND DISCUSSION

JP 2015-201989 A discloses a rotary electric machine rotor in which a rotor core is fixed on the outer diameter side of a shaft member. The rotor core is formed as a stack in which a plurality of steel sheets are stacked while being shifted in the circumferential direction. In JP 2015-201989 A, a skew groove is formed in a surface formed by the steel sheets, and the shaft member includes an outer tubular body that has an engagement protruding portion to be inserted into the skew groove, and an inner shaft body that is to be inserted into the inner peripheral side of the outer tubular body.

In JP 2015-201989 A, a tapered surface is formed at the inner peripheral surface of a tubular insertion portion of the outer tubular body, and a tapered surface is formed at the outer peripheral surface of a second tubular insertion portion of the inner shaft body. In the fabrication of the rotor, the tubular insertion portion is inserted into the inner peripheral side of the rotor core and, while keeping this state, the second tubular insertion portion is inserted into the inner peripheral side of the tubular insertion portion to cause part of the tubular insertion portion to be deformed toward the outer diameter side, thus forming an engagement protruding portion. In an embodiment described in JP 2015-201989 A, the engagement protruding portion is engaged with the skew groove in the steel sheets.

As described in JP 2015-201989 A, a rotor that has a rotor core integrated with a shaft member is manufactured in such a manner that a plurality of disk-shaped steel sheets are stacked, a tubular insertion portion of an outer tubular body is inserted into the central hole-shaped portion of the stacked steel sheets, and a second tubular insertion portion of an inner tubular body is inserted into the tubular insertion portion of the outer tubular body so as to keep the plurality of steel sheets in a stacked state. In this manner, the outer tubular body and the inner tubular body are fitted to each other, and the plurality of steel sheets are held in a stacked state.

The rotor described in JP 2015-201989 A is configured such that a skew groove is formed in the surface formed by the plurality of steel sheets, and the tapered surface at the inner peripheral surface of the tubular insertion portion of the outer tubular body, and the tapered surface at the outer peripheral surface of the second tubular insertion portion are brought into pressure contact with each other. The pressure contact gives rise to deformation of part of the tubular insertion portion toward the outer diameter side, and an engagement protruding portion formed by this deformation is engaged with the skew groove in the steel sheets.

In this configuration, the rotor involves a large number of parts, the outer tubular body and the inner shaft body that constitute the shaft member have complicated structures, and a high load is required at the time of assembling the rotor. These and other facts give rise to a concern that the number of manufacturing steps will be increased. Furthermore, the complicated structures make it difficult to disassemble the rotor at the time of disposal or the like.

Hereinafter, the term "rotor core" indicates a cylindrical body after extraction of a shaft body from a stack of core sheets, and the term "rotor" indicates a body obtained by inserting a shaft into the hole portion of a rotor core and integrating the shaft with the rotor core.

In a conceivable case of rotor assembling, for example, core sheets (steel sheets in the above literature) may be used that are each provided with an engagement protruding portion at a specific position on the inner periphery of a hole portion disposed at the center of the disk-shaped sheet material (a position at a fixed location in a direction along the inner periphery of the hole portion), and a rotor core may be produced using an assembling jig that includes a shaft-shaped portion having on its outer surface a guide groove inclined with respect to the center of the shaft-shaped portion. This guide groove is formed in a spiral shape on the outer surface of the shaft-shaped portion.

Stacking a plurality of core sheets using such a jig as described above requires a process in which each core sheet is slightly rotated so that the engagement protruding portion of the core sheet will be positioned to the guide groove and the core sheet is moved relative to the shaft-shaped portion along the axial direction while inserting the shaft-shaped body into the hole portion of the core sheet. This core sheet stacking process results in a rotor core in which the plurality of core sheets are arranged in a skew state.

When a rotor core is assembled by such a process, use can be made of core sheets that have the same shape in which an engagement protruding portion is disposed at a specific position on the inner periphery of a hole portion. However, assembling takes a time due to the fact that the engagement protruding portion of each core sheet is to be positioned to the guide groove and the core sheet has to be slightly rotated each time the core sheet is stacked.

Furthermore, the rotor manufacturing involves a process in which the stack of core sheets and the shaft body are rotated relative to each other in order to extract the shaft body from the stack of core sheets (the rotor core).

A need thus exists for a rotary electric machine rotor that has a rotor core including a plurality of core sheets stacked in a skew state and that can be produced in a small number of steps and can be disassembled easily. A need further exists for a method of manufacturing a rotary electric machine rotor that can produce in a small number of steps a rotary electric machine rotor that has a rotor core including a plurality of core sheets stacked in a skew state.

### SUMMARY

A rotary electric machine rotor according to the present disclosure includes a rotor core including a stack of a plurality of core sheets each having a shaft hole at the center; a shaft inserted through the shaft holes; and an adapter disposed between the shaft and the rotor core and engaged with both the shaft and the rotor core, wherein the plurality of core sheets stacked have, on the inner peripheral surface of the core sheets, an engagement portion extending from one end side to the other end side in the axial direction of the shaft; the adapter has, on the outer peripheral surface of the adapter, a guide portion extending from one end side to the other end side in the axial direction of the shaft; one of the engagement portion and the guide portion is an engagement recessed portion recessed along the radial direction of the shaft, and the other is an engagement protruding portion protruding along the radial direction of the shaft and engaged with the engagement recessed portion; the engagement recessed portion and the engagement protruding portion have a shape twisted at a predetermined twist angle along the circumferential direction of the shaft; and the adapter is engaged with the shaft detachably from the shaft along the axial direction of the shaft.

According to the above configuration, the adapter is detachable along the axial direction of the shaft. When the rotor is to be disassembled, the rotor core can be separated together with the adapter from the shaft simply by moving the adapter along the axial direction of the shaft. Furthermore, the rotor core and the adapter can be separated from each other by removing the adapter from the rotor core inward in the radial direction of the shaft holes. The rotor according to the above configuration can be disassembled easily. Furthermore, at the time of fabrication of the rotor core according to the above configuration, the plurality of core sheets are stacked, the guide portion of the adapter is engaged with the engagement portions on the inner peripheral surface of the respective shaft holes, a jig is inserted into the inner periphery of the stack of core sheets, the adapter is engaged with the jig, and the engagement portions of the shaft holes are engaged with the guide portion of the adapter. In this manner, the plurality of core sheets can be brought into a skew state in which the core sheets are twisted at a twist angle along the circumferential direction. That is, the engagement of the adapter with the jig determines the posture of the adapter with reference to the axial direction of a shaft-shaped portion of the jig, and determines the twist angle in the circumferential direction of each of the plurality of core sheets engaged, via the engagement portion, with the guide portion of the adapter. As described above, the use of adapter in the fabrication of the rotor core enables fixing of a plurality of core sheets in a skew state while eliminating, for example, repeated operations of bringing the engagement portion, such as an engagement protrusion, on the inner periphery of the shaft hole of the core sheet into engagement with a groove on the outer periphery of the jig each time the core sheet is stacked. According to the above configuration, the rotary electric machine rotor that has a rotor core in which a plurality of core sheets are stacked in a skew state can be manufactured in a small number of steps and can be disassembled easily.

A method of manufacturing a rotary electric machine rotor according to the present disclosure uses a jig having a shaft-shaped portion, and an adapter engageable with the shaft-shaped portion detachably along the axial direction of the shaft-shaped portion, the adapter being such that the adapter has a guide portion disposed on the outer peripheral surface, the guide portion is one of an engagement recessed portion recessed along the radial direction of the shaft-shaped portion or an engagement protruding portion protruding along the radial direction of the shaft-shaped portion, and the engagement recessed portion and the engagement protruding portion each have a shape twisted at a predetermined twist angle along the circumferential direction of the shaft-shaped portion, and the method includes: a stacking step in which a plurality of core sheets are stacked, the core sheets each having a shaft hole at the center and either a protruding portion or a recessed portion on the inner periphery of the shaft hole, the protruding portion and the recessed portion being engageable with the guide portion, and the plurality of core sheets are guided by the guide portion so that the protruding portions or the recessed portions of the respective core sheets in a stacked state are engaged with the guide portion and so that the plurality of core sheets are continuously displaced in the rotational direction with respect to the central axis of the shaft-shaped portion, and thereby the adapter is placed inside the shaft holes; an alignment step in which the shaft-shaped portion is inserted into the shaft holes of the plurality of core sheets in a stacked state while engaging the adapter with the shaft-shaped portion, and thereby the plurality of core sheets and the adapter are moved along the axial direction of the shaft-shaped portion; a pressing step of applying a pressure to the stack of core sheets along the stacking direction; an extraction step of extracting the shaft-shaped portion from the shaft holes after the pressing step; and an attaching step of inserting a shaft into the shaft holes while engaging the shaft with the adapter after the extraction step.

According to the method configured as described above, in the stacking step, the adapter is inserted into the shaft holes of the plurality of core sheets stacked, and the engagement portions of the plurality of core sheets are engaged with the guide portion of the adapter. In this manner, the guide portion guides the plurality of core sheets into a stack with a skew state in which the core sheets are continuously displaced in the rotational direction with respect to the central axis of the shaft-shaped portion. In the next alignment step, the shaft-shaped portion is inserted into the shaft holes of the core sheets while engaging the adapter with the shaft-shaped portion, and thereby the plurality of core sheets and the adapter are arranged along the axial direction of the shaft-shaped portion. This determines the posture of the adapter with respect to the jig, and the plurality of core sheets can be held in a skew state. In the next pressing step, the plurality of core sheets in a stacked state can be integrated into a unit that is tight in the stacking direction. In the next extraction step, the shaft-shaped portion is extracted from the plurality of core sheets in a fixed state along the axial direction of the shaft-shaped portion. In the subsequent attaching step, a shaft is engaged with the adapter. A rotary electric machine rotor that has a rotor core integrally rotatable with the shaft is thus obtained. As described above, the use of adapter in the fabrication of the rotor core enables fixing of a plurality of core sheets in a skew state while eliminating, for example, repeated operations of bringing the engagement portion, such as an engagement protrusion, on the inner periphery of the shaft hole of the core sheet into engagement with a groove on the outer periphery of the jig each time the core sheet is stacked. Thus, the manufacturing method configured as described above can produce, with a small number of steps, a rotary electric machine rotor that has a rotor core in which a plurality of core sheets are stacked in a skew state.

Another method of manufacturing a rotary electric machine rotor according to the present disclosure uses a jig having a shaft-shaped portion, and an adapter engageable with the shaft-shaped portion detachably along the axial direction of the shaft-shaped portion, the adapter being such that the adapter has a guide portion disposed on the outer peripheral surface, the guide portion is one of an engagement recessed portion recessed along the radial direction of the shaft-shaped portion or an engagement protruding portion protruding along the radial direction of the shaft-shaped portion, and the engagement recessed portion and the engagement protruding portion each have a shape twisted at a predetermined twist angle along the circumferential direction of the shaft-shaped portion, and the method includes: a stacking step in which a plurality of core sheets are stacked, the core sheets each having a shaft hole at the center and either a protruding portion or a recessed portion on the inner periphery of the shaft hole, the protruding portion and the recessed portion being engageable with the guide portion, and the plurality of core sheets are guided by the guide portion so that the protruding portions or the recessed portions of the respective core sheets in a stacked state are engaged with the guide portion and so that the plurality of core sheets are continuously displaced in the rotational direction with respect to the central axis of the shaft-shaped portion, and thereby the adapter is placed inside the shaft holes; an alignment step in which the shaft-shaped portion is inserted into the shaft holes of the plurality of core sheets in a stacked state while engaging the adapter with the shaft-shaped portion, and thereby the plurality of core sheets and the adapter are moved along the axial direction of the shaft-shaped portion; a pressing step of applying a pressure to the stack of core sheets along the stacking direction; an extraction step of extracting the shaft-shaped portion from the shaft holes after the pressing step; a separation step in which the adapter after the extraction step is moved toward the radial center side of the shaft holes and is thereby separated from the protruding portions or the recessed portions of the plurality of core sheets, and the adapter is taken out from the shaft holes to the outside; and an attaching step of inserting a shaft into the shaft holes after the separation step.

According to the method configured as described above, in the stacking step, the adapter is inserted into the shaft holes of the plurality of core sheets stacked, and the engagement portions of the plurality of core sheets are engaged with the guide portion of the adapter. In this manner, the guide portion guides the plurality of core sheets into a stack with a skew state in which the core sheets are continuously displaced in the rotational direction with respect to the central axis of the shaft-shaped portion. In the next alignment step, the shaft-shaped portion is inserted into the shaft holes of the core sheets while engaging the adapter with the shaft-shaped portion, and thereby the plurality of core sheets and the adapter are arranged along the axial direction of the shaft-shaped portion. This determines the posture of the adapter with respect to the jig and allows the plurality of core sheets to be held in a skew state. In the next pressing step, the plurality of core sheets in a stacked state can be integrated into a unit that is tight in the stacking direction. In the next extraction step, the shaft-shaped portion is extracted from the shaft holes. In the next separation step, the adapter is separated. In the attaching step, a shaft is inserted into the shaft holes. A rotary electric machine rotor that has a rotor core integrally rotatable with the shaft is thus obtained. As described above, the use of adapter in the fabrication of the rotor core enables fixing of a plurality of core sheets in a skew state while eliminating, for example, repeated operations of bringing the engagement portion, such as an engagement protrusion, on the inner periphery of the shaft hole of the core sheet into engagement with a groove on the outer periphery of the jig each time the core sheet is stacked. Thus, the manufacturing method configured as described above can produce, with a small number of steps, a rotary electric machine rotor that has a rotor core in which a plurality of core sheets are stacked in a skew state.

### BRIEF DESCRIPTION OF THE DRAWINGS

The foregoing and additional features and characteristics of this disclosure will become more apparent from the following detailed description considered with the reference to the accompanying drawings, wherein:
Fig. 1 is a perspective view of a rotary electric machine rotor;
Fig. 2 is a perspective view of an adapter;
Fig. 3 is a sectional view of the rotary electric machine rotor;
Fig. 4 is a plan view of core sheets in a stacked state;
Fig. 5 is a sectional view illustrating a positional relationship between the core sheets in a stacked state and an adapter;
Fig. 6 is a sectional view illustrating an engagement protruding portion of a core sheet on the upstream side in the stacking direction, and the adapter;
Fig. 7 is a sectional view illustrating an engagement protruding portion of a core sheet on the downstream side in the stacking direction, and the adapter;
Fig. 8 is a sectional view of the adapter on the upstream side in the stacking direction;
Fig. 9 is a sectional view of the adapter on the downstream side in the stacking direction;
Fig. 10 is a perspective view illustrating a jig, the adapters, the core sheets, and a runner plate;
Fig. 11 is a flowchart of a method of manufacturing a rotor;
Fig. 12 is a diagram schematically illustrating a flow of the method of manufacturing a rotor;
Fig. 13 is a flowchart of a second method of manufacturing a rotor; and
Fig. 14 is a diagram schematically illustrating a flow of the second method of manufacturing a rotor.

### DETAILED DESCRIPTION

Hereinafter, embodiments of a rotary electric machine rotor and a method of manufacturing a rotary electric machine rotor according to the present disclosure will be described with reference to the drawings. The present disclosure is not limited to the following embodiments, and various modifications can be made without departing from the scope of the present disclosure.

### [Basic configurations]

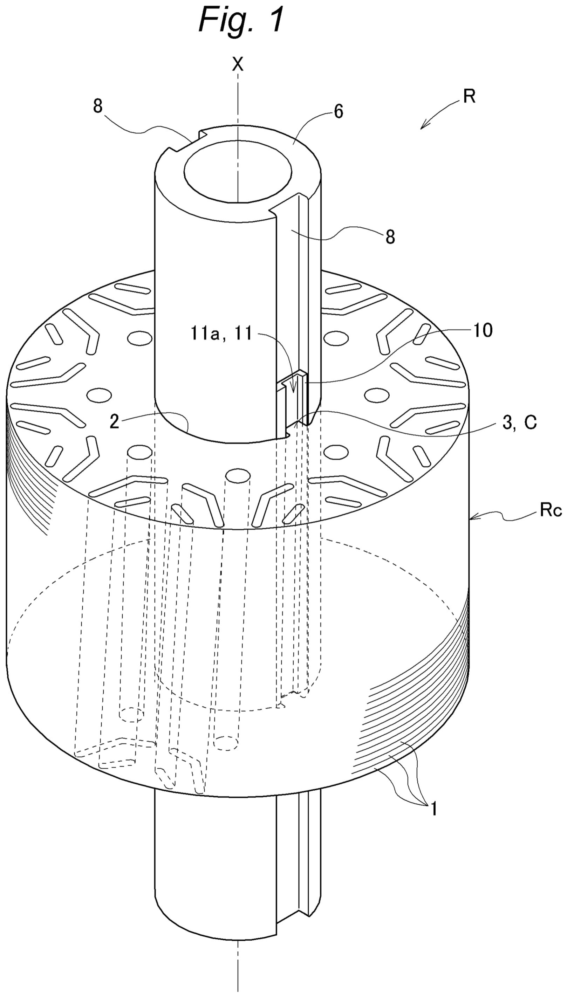

As illustrated in Figs. 1 to 3, a rotary electric machine rotor R includes a rotor core Rc including a stack of a plurality of core sheets 1 that are disk shapes made of a magnetic material and are each perforated with a shaft hole 2 at the center; a shaft 6 inserted into the shaft hole 2 of the rotor core Rc (the shaft holes 2 of the core sheets 1 in a stacked state); and a pair of adapters 10 engaged with the rotor core Rc and the shaft 6. As a result of this configuration of the rotary electric machine rotor R, the rotor core Rc and the shaft 6 can be rotated integrally.

In a rotary electric machine, the rotor R is supported so as to be rotatable about the central axis X of the shaft 6. The rotary electric machine is not limited to an electric motor, and may be a generator.

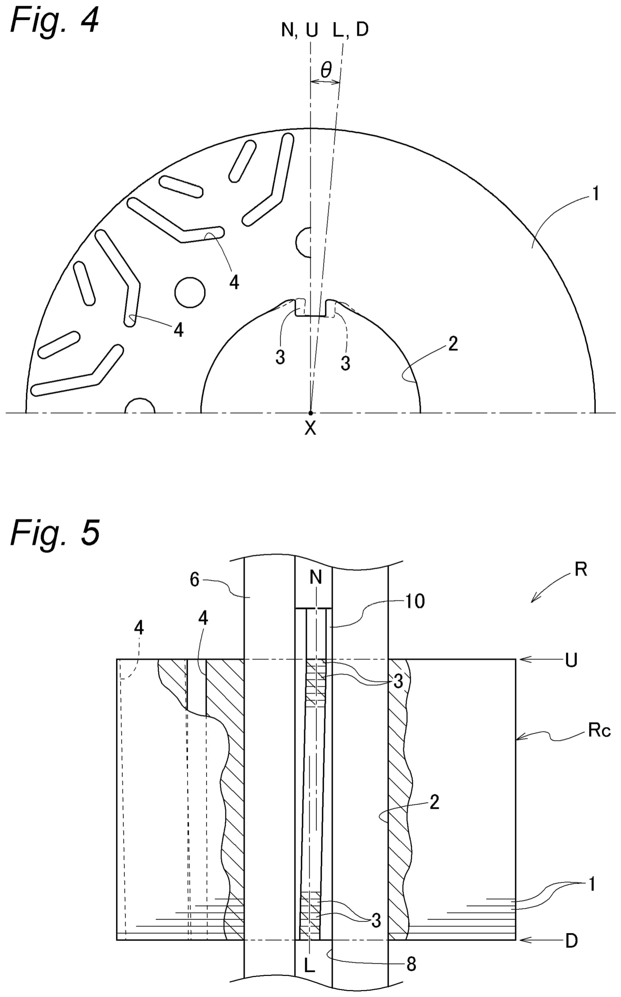

As illustrated in Figs. 4 to 7 and 10, the core sheets 1 have a pair of engagement protruding portions 3 (an example of the engagement portions C) that protrude from the inner periphery of the shaft hole 2 toward the radial center. The core sheets 1 used here have the same shape in which a plurality of through holes are disposed as magnet holes 4. In the core sheets 1, the inner diameter of the shaft hole 2 is equal to the outer diameter of the shaft 6.

The engagement protruding portions 3 as the engagement portions C may be replaced by recessed portions that are recessed outward in the radial direction. When the engagement protruding portions 3 are replaced by recessed portions, guide portions 11 of the adapters 10 described later are formed in a protruding shape.

As a result of the rotor core Rc being constructed by stacking of the core sheets 1 having the same shape on top of one another in a skew state, as illustrated in Figs. 4 and 5, the plurality of engagement protruding portions 3 of the plurality of core sheets 1 in a stacked state form a line on the inner peripheral surface of the shaft holes 2 that is twisted at an angle corresponding to a predetermined twist angle (maximum twist angle θ) along the circumferential direction of the shaft 6 from one end side to the other end side in the axial direction of the shaft 6.

In the rotor core Rc, similarly to the engagement protruding portions 3, a plurality of magnet holes 4 are formed so as to extend from one end side in the axial direction (the position of the upper end line U illustrated in Fig. 5) to the other end side (the position of the lower end line D illustrated in Fig. 5). The magnet holes 4 are formed as holes that are twisted at an angle corresponding to a predetermined twist angle (maximum twist angle θ) along the circumferential direction of the shaft 6, and the magnet holes 4 accommodate a plurality of permanent magnets as bonded magnets. The permanent magnets provided as described above form eight magnetic poles in the rotor core Rc.

The adapter 10 has a guide portion 11 that is recessed in the outer surface. The guide portion 11 includes an engagement recessed portion 11a to be engaged with the engagement protruding portion 3. The engagement recessed portion 11a of the guide portion 11 is engaged with the plurality of engagement protruding portions 3 (an example of the engagement portions C). The adapters 10 are engaged with engagement grooves 8 of the shaft 6, and are detachable from the shaft 6 by being moved in a direction along the central axis X of the shaft 6. Details of this engagement configuration will be described later.

Assuming that the center of the shaft 6 is the central axis X, the outer periphery of the plurality of core sheets 1 supported by the shaft 6 has a circular shape centered on the central axis X. The shaft holes 2 have a circular shape centered on the central axis X.

In the plurality of core sheets 1 constituting the rotor core Rc, one side in the stacking direction (the position of the upper end line U in Fig. 5) is sometimes referred to as the upstream side in the stacking direction, and the other side (the position of the lower end line D in Fig. 5) is sometimes referred to as the downstream side in the stacking direction. This assignment of one side and the other side in the stacking direction is based on the description in the manufacturing method that will be explained later.

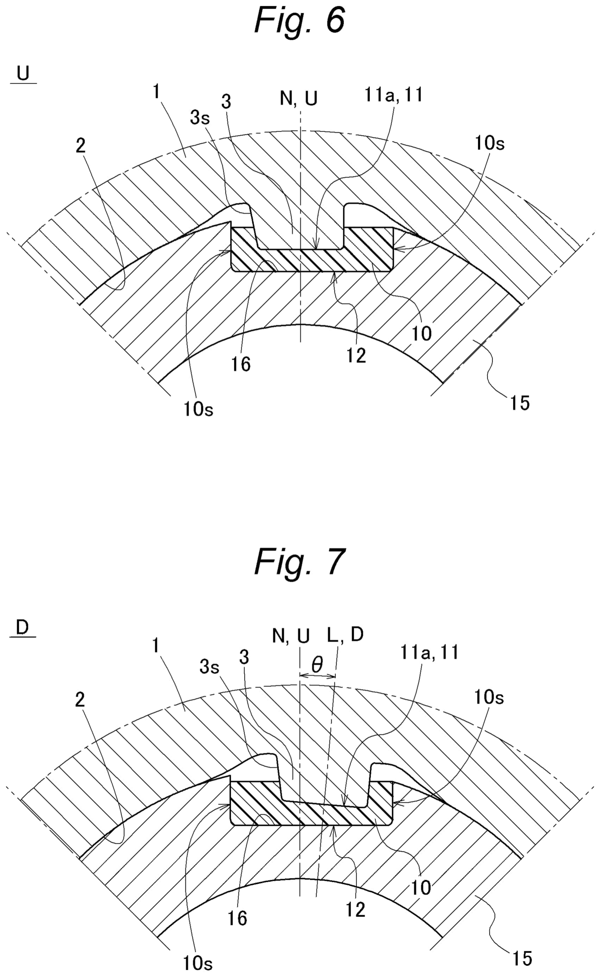

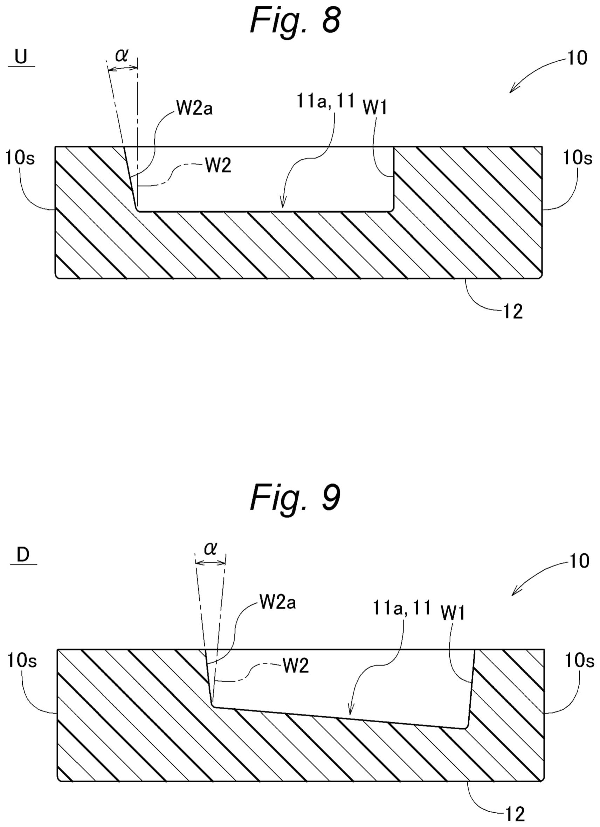

In the rotor R of the present embodiment, the rotor core Rc and the shaft 6 are held in an engaged state via the adapters 10 used at the time of stacking, and the shaft 6 and the rotor core Rc can be rotated integrally via the adapters 10. In order to enable reuse of components, such as parts, metal materials, and resin materials, at the time of discarding, the rotor R according to the present embodiment is configured so that, after the shaft 6 is removed from the rotor core Rc, the adapters 10 can be easily separated from the inner surface of the rotor core Rc. While details will be described later, the rotor R of the present embodiment has a draft α in the engagement recessed portions 11a of the adapters 10 (see Figs. 8 and 9). As a result of having a draft α in the engagement recessed portions 11a, the rotor R of the present embodiment is further designed such that the shape of a side surface 3s of the engagement protruding portion 3 on the side opposite to the skew direction is spread to the same extent as the twist angle so that the shape will follow the inner surface of the engagement recessed portion 11a. This design enables surface contact between the side surface 3s of the engagement protruding portion 3 (see Figs. 6 and 7) and the inner surface of the engagement recessed portion 11a, thus facilitating the transmission of a force from the shaft 6 to the rotor core Rc via the adapters 10.

### [Method of manufacturing a rotary electric machine rotor]

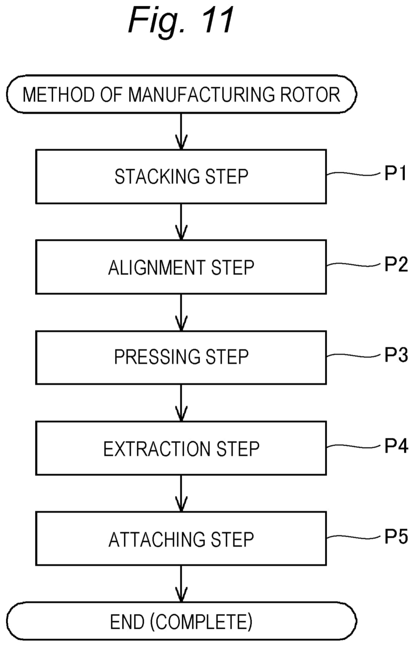

As illustrated in Fig. 11, the rotor R is manufactured by performing stacking step P1, alignment step P2, pressing step P3, extraction step P4, and attaching step P5 in this order. In particular, the use of a pair of adapters 10 and a jig G in the stacking step P1 allows a plurality of core sheets 1 having the same shape to be stacked in a skew state in which the core sheets 1 are continuously displaced in the rotational direction with respect to the central axis X of a shaft-shaped portion 15 of the jig G.

In a conceivable case of stacking a plurality of core sheets 1 in a skew state, use may be made of a plurality of types of core sheets 1 differing from one another in the positions of the engagement protruding portions 3 in the circumferential direction of the shaft hole 2. In this case, the use of a plurality of types of core sheets 1 differing in the positions of the engagement protruding portions 3 can be accompanied by the use of a jig that has guide grooves on the outer surface of a shaft-shaped portion 15 in a posture parallel to the axial center. Thus, the use of a plurality of types of core sheets 1 eliminates the execution of relative rotation of the core sheets 1 and the shaft-shaped portion 15 at the time of fabricating a rotor core Rc, and such core sheets 1 can be stacked easily.

However, using a plurality of types of core sheets 1 having different shapes is disadvantageous in that the use of a plurality of core sheets 1 having different shapes leads to an increased number of parts, and the fabrication of a rotor core Rc is troublesome because the plurality of core sheets 1 have to be stacked in an appropriately controlled order.

A method of manufacturing a rotary electric machine rotor R according to the present embodiment can produce, by virtue of using the adapters 10, a rotor R from core sheets 1 having the same shape without requiring relative rotation of the core sheets 1 and a shaft-shaped portion 15.

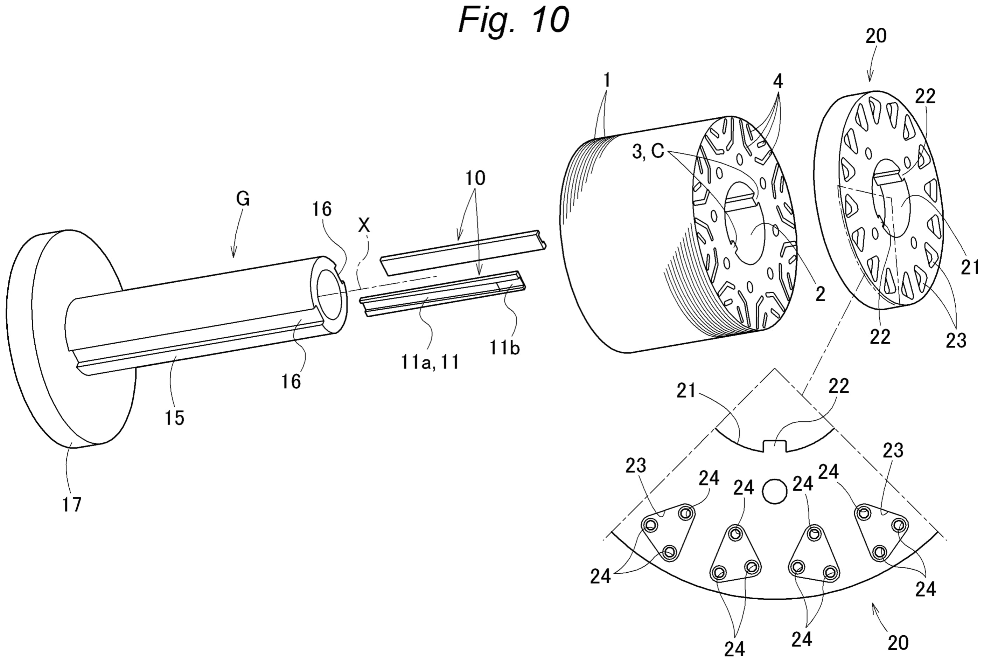

As illustrated in Fig. 10, the method of manufacturing a rotary electric machine rotor R uses a jig G having a shaft-shaped portion 15, a pair of adapters 10, and a runner plate 20 having a disk shape. Although the shaft-shaped portion 15 is a member different from the shaft 6, the center thereof will be referred to as the central axis X similarly to the center of the shaft 6.

### [Method of manufacturing a rotary electric machine rotor: Jig/runner plate]

The jig G has a shaft-shaped portion 15 having a cylindrical shape. A pair of engagement groove portions 16 parallel to the central axis X of the shaft-shaped portion 15 are disposed on the outer surface of the shaft-shaped portion 15. Furthermore, the shaft-shaped portion 15 includes a disk-shaped support plate 17 at an end on the downstream side in the stacking direction in which a plurality of core sheets 1 are stacked.

The shaft-shaped portion 15 is formed with an outer diameter equal to that of the shaft 6 illustrated in Figs. 1 and 5. The engagement groove portions 16 are formed with the same width and the same depth as engagement grooves 8 disposed in the shaft 6.

The runner plate 20 is disposed in an externally fitted state at an end on the upstream side (hereinafter, also referred to as the upper end side) in the stacking direction in which a plurality of core sheets 1 are stacked. The runner plate 20 is equal in outer diameter to the core sheets 1, and has a through hole 21 that is equal in inner diameter to the shaft holes 2, and engagement protrudent portions 22 that are disposed on the inner periphery of the through hole 21.

As illustrated in Fig. 10, the runner plate 20 includes as many guide recessed portions 23 as twice the number of magnetic poles (the number of the guide recessed portions 23 is appropriately increased or decreased depending on the size and the arrangement of the magnet holes 4), and a plurality of filling holes 24 that are open in the bottom surface of each guide recessed portion 23. The description here assumes that the runner plate 20 is formed of a steel material, but the runner plate 20 may be formed of a resin.

### [Method of manufacturing a rotary electric machine rotor: Adapters]

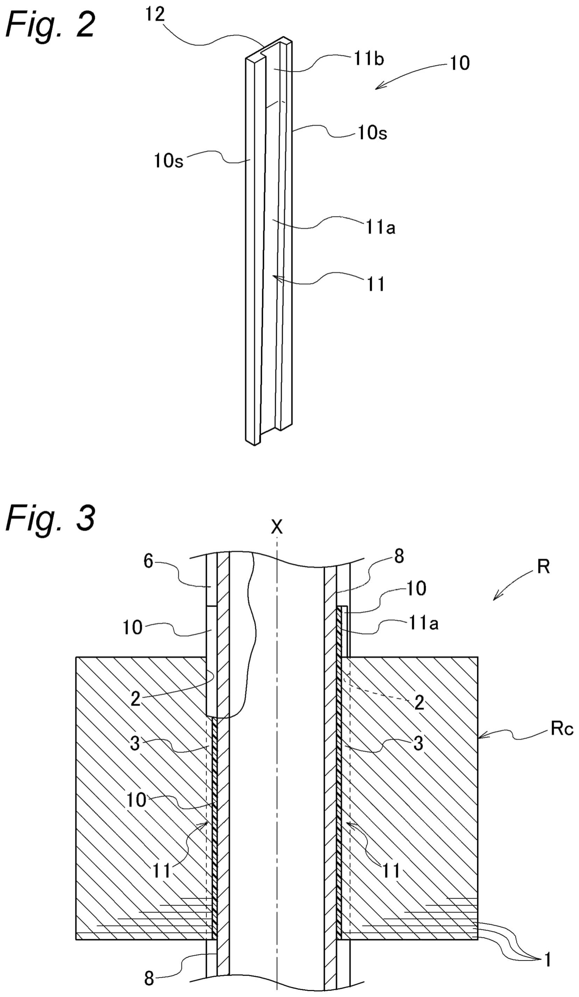

As illustrated in Figs. 2 and 10, the adapter 10 has a linear guide portion 11 on one surface thereof. This guide portion 11 includes an engagement recessed portion 11a with which the engagement protruding portion 3 (the engagement portion C) can be engaged. On the other surface of the adapter 10, an engagement surface portion 12 is disposed on the back of the guide portion 11.

The engagement surface portion 12 of the adapter 10 is formed in a strip shape that has a width slightly smaller than the width of the engagement groove 8 of the shaft 6 and the width of the engagement groove portion 16 of the shaft-shaped portion 15, and has a predetermined length along a direction parallel to the axial direction X, and a predetermined thickness. The engagement surface portion 12 of the adapter 10 is engageable with the engagement groove 8 of the shaft 6 and the engagement groove portion 16 of the shaft-shaped portion 15, and the adapter 10 can be attached to and detached from the shaft 6 or the shaft-shaped portion 15 by being moved relative to the engagement groove 8 or the engagement groove portion 16 in a direction along the central axis X. Both end portions of the adapter 10 in the width direction are sometimes referred to as side surfaces 10s.

The guide portion 11 includes a groove-shaped engagement recessed portion 11a that will be inclined with respect to the central axis X, and a groove-shaped engagement holding portion 11b that will be parallel to the central axis X when the adapter 10 is engaged with any of the engagement groove 8 of the shaft 6 and the engagement groove portion 16 of the shaft-shaped portion 15.

The adapters 10 are formed of a metal or a resin. The engagement recessed portion 11a of the adapter 10 is engageable with the engagement protruding portions 3 of the respective core sheets 1. The engagement holding portion 11b of the adapter 10 is engageable with the engagement protrudent portion 22 of the runner plate 20.

This configuration of the adapters 10 allows the adapters 10 to be engaged with the engagement groove portions 16 of the shaft-shaped portion 15 of the jig G while the engagement protruding portions 3 of the respective core sheets 1 are engaged with the engagement recessed portions 11a. As a result, a plurality of core sheets 1 can be stacked in a skew state in which the core sheets 1 are twisted by a preset angle with respect to the central axis X of the shaft-shaped portion 15.

Fig. 4 is a plan view of the core sheets 1 stacked in a skew state as viewed along the central axis X. In Fig. 4, the solid line indicates the engagement protruding portion 3 of the core sheet 1 at the upstream end in the stacking direction, and the two-dot chain line indicates the engagement protruding portion 3 of the core sheet 1 at the downstream end in the stacking direction. When a plurality of core sheets 1 are stacked in a skew state to form a rotor core Rc, as illustrated in the drawing, the engagement protruding portions 3 of the respective core sheets 1 are displaced in the circumferential direction while partially overlapping one another as viewed in a direction along the central axis X. Here, the maximum twist angle θ is an angle formed by the reference line N connecting the central axis X to the engagement protruding portion 3 of the core sheet 1 at the upstream end in the stacking direction, and the end line L connecting the central axis X to the engagement protruding portion 3 of the core sheet 1 at the downstream end in the stacking direction. That is, the engagement protruding portion 3 of the core sheet 1 at the upstream end in the stacking direction and the engagement protruding portion 3 of the core sheet 1 at the downstream end in the stacking direction are dislocated at the maximum twist angle θ. Thus, the rotor core Rc formed by stacking a plurality of core sheets 1 in a skew state has ridge portions including a plurality of engagement protruding portions 3 on the inner surface of the shaft holes 2, and the ridge portions have a shape that is twisted with respect to the central axis X.

The engagement holding portions 11b of the adapters 10 are engaged with the engagement protrudent portions 22 of the runner plate 20. As a result, the magnet holes 4 of the core sheet 1 at the upstream end in the stacking direction and the filling holes 24 of the runner plate 20 are arranged at positions where they overlap each other as viewed in a direction along the central axis X.

On the upstream side in the core sheet 1 stacking direction (the position of the upper end line U), as illustrated in Fig. 6, the engagement protruding portion 3 of the core sheet 1 at the upstream end in the stacking direction is engaged with part of the engagement recessed portion 11a of the adapter 10 that is located at the upstream end in the core sheet 1 stacking direction. On the downstream side in the core sheet 1 stacking direction (the position of the lower end line D), as illustrated in Fig. 7, the engagement protruding portion 3 of the core sheet 1 at the downstream end in the stacking direction is engaged with part of the engagement recessed portion 11a of the adapter 10 that is located at the downstream end in the core sheet 1 stacking direction.

It is conceivable that at the position (on the downstream side in the stacking direction) where the maximum twist angle θ is reached, the engagement recessed portion 11a engaged with the engagement protruding portion 3 maintains the engagement through a pair of inner wall surfaces including a first inner wall surface W1 and a second inner wall surface W2 parallel to each other in cross sectional shape as illustrated in Fig. 9.

However, the cross sectional shapes of the first inner wall surface W1 and the second inner wall surface W2 illustrated in Fig. 9 are such that the second inner wall surface W2 that corresponds to the inner surface opposite to the skew direction has an angle (undercut state) that inhibits the separation of the engagement protruding portion 3 by the movement of the core sheet 1 in the radially inward direction. In view of this, a draft α is added to the second inner wall surface W2 to enlarge the opening adjacent to the second inner wall surface W2. That is, an inclined second inner wall surface W2a is formed.

On the other hand, it is conceivable that at the end on the upstream side in the stacking direction, the engagement recessed portion 11a engaged with the engagement protruding portion 3 has a first inner wall surface W1 and a second inner wall surface W2 in a posture parallel to the reference line N as illustrated in Fig. 8. In the engagement recessed portion 11a at this position too, however, the second inner wall surface W2 corresponding to the inner surface opposite to the skew direction may have a strong contact with the engagement protruding portion 3. Thus, similarly to the downstream side in the stacking direction, a draft α is added to the second inner wall surface W2 to enlarge the opening adjacent to the second inner wall surface W2. That is, an inclined second inner wall surface W2a is formed. In particular, the draft α is inclined by an angle corresponding to the maximum twist angle θ, in a direction that enlarges the opening in the engagement recessed portion 11a (the region into which the engagement protruding portion 3 enters).

While the drawings illustrate the inclined second inner wall surface W2a of the engagement recessed portion 11a on the downstream side in the stacking direction and on the upstream side in the stacking direction, this inclined second inner wall surface W2a is also formed in the middle of the region from the downstream side in the stacking direction to the upstream side in the stacking direction.

By virtue of the inclined second inner wall surface W2a formed with a draft α, the adapter 10 can be easily separated from the engagement protruding portions 3 simply by moving the adapter 10 toward the center side of the shaft holes 2 along the radially inward direction of the core sheets 1.

As a result of adding a draft α to the engagement recessed portion 11a to form the inclined second inner wall surface W2a in the present embodiment, as illustrated in Figs. 6 and 7, the shape of a side surface 3s of the engagement protruding portion 3 on the side opposite to the skew direction is spread to the same extent as the twist angle so that the shape will follow the inclined second inner wall surface W2a of the engagement recessed portion 11a. The above configuration enables surface contact between the side surface 3s of the engagement protruding portion 3 and the inclined second inner wall surface W2a of the engagement recessed portion 11a, and thereby can reduce the load on a contact between the engagement protruding portion 3 and the engagement recessed portion 11a and can suppress the occurrence of misalignment between the engagement protruding portion 3 and the engagement recessed portion 11a.

### [Method of manufacturing a rotary electric machine rotor: Stacking step P1]

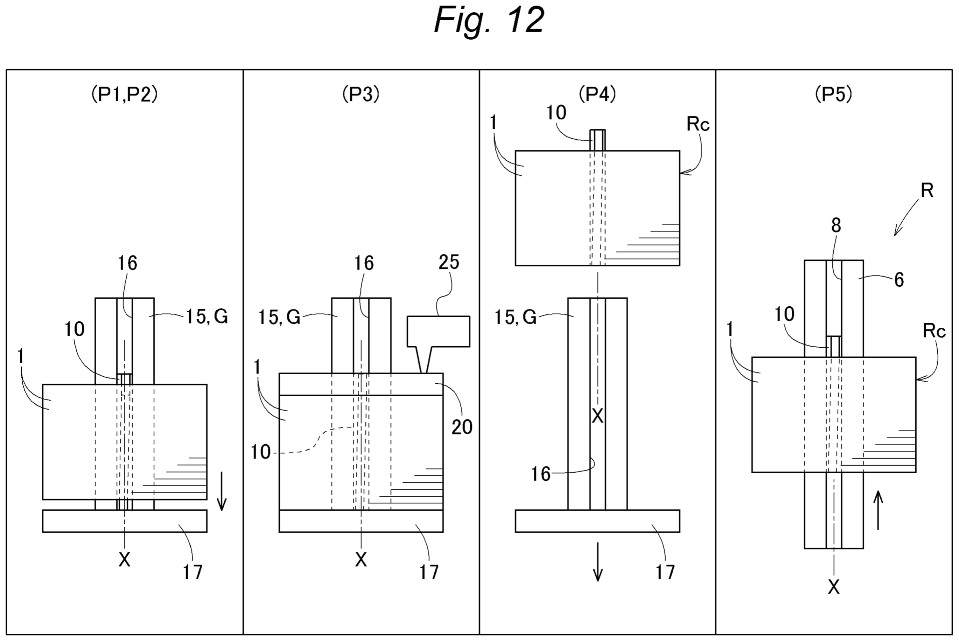

As illustrated in Fig. 10 and the column (P1, P2) among the columns in Fig. 12, the stacking step P1 is a step in which a plurality of core sheets 1 each having a pair of engagement protruding portions 3 as engagement portions C are overlapped and stacked, and two adapters 10 are placed inside shaft holes 2 so that the engagement protruding portions 3 of the respective core sheets 1 in a stacked state will be engaged with the engagement recessed portions 11a of the guide portions 11.

In the stacking step P1, the pair of adapters 10, after being inserted into the shaft holes 2, are moved outward in the radial direction so that the engagement protruding portions 3 of the respective core sheets 1 in a stacked state will be engaged with the engagement recessed portions 11a of the guide portions 11. In the stacking step P1, the plurality of core sheets 1 are simply in an overlapped state and therefore the rotational posture (the rotational posture relative to the center of the shaft holes 2) of the plurality of core sheets 1 can be easily changed by an external force, such as a human operation.

In the stacking step P1, the engagement protruding portions 3 of the respective core sheets 1 in a stacked state are engaged with the engagement recessed portions 11a of the guide portions 11, and consequently a skew state is reached in which the plurality of core sheets 1 are continuously displaced in the rotational direction with respect to the central axis X of the shaft-shaped portion 15. Setting the plurality of core sheets 1 into such a skew state requires an action of a slight external force.

### [Method of manufacturing a rotary electric machine rotor: Alignment step P2]

Furthermore, as illustrated in Fig. 10 and the column (P1, P2) among the columns in Fig. 12, the alignment step P2 is a step in which the shaft-shaped portion 15 of the jig G is inserted into the shaft holes 2 of the plurality of core sheets 1 stacked in a skew state. In this manner, relative movement is made along the central axis X while the adapter 10 is fitted to each of the pair of engagement groove portions 16, and the plurality of core sheets 1 in a stacked state and the shaft-shaped portion 15 are moved relative to each other until the core sheet 1 on the downstream side in the stacking direction comes into contact with the support plate 17.

In this alignment step P2, the side surfaces 10s of the adapters 10 are engaged with the engagement groove portions 16 of the shaft-shaped portion 15. This engagement brings the side surfaces 10s of the adapters 10 into a posture parallel to the central axis X of the shaft-shaped portion 15, and fixes the skew state of the plurality of core sheets 1 in a stacked state.

The alignment step P2 creates a stacked state in which the plurality of core sheets 1 are aligned along the central axis X of the shaft-shaped portion 15, and the shaft holes 2 of the plurality of core sheets 1 and the outer peripheries of the plurality of core sheets 1 are arranged on the coaxial core. In the alignment step P2, the two adapters 10 inside the shaft holes 2 may be caused to apply pressure outward in the radial direction until immediately before the shaft-shaped portion 15 is completely inserted into the shaft holes 2.

After the insertion, the runner plate 20 is placed so that the shaft-shaped portion 15 will be inserted into the through hole 21 and the runner plate 20 will be in contact with the core sheet 1 at the upstream end in the stacking direction. The alignment step P2 ends here. The runner plate 20 may be placed in the next pressing step P3.

### [Method of manufacturing a rotary electric machine rotor: Pressing step P3]

Next, as illustrated in Fig. 10 and the column (P3) among the columns in Fig. 12, the pressing step P3 is a step in which a pressure is applied to the stack of core sheets 1 in the stacking direction via the runner plate 20, and thereby the plurality of core sheets 1 are held in tight contact and integrated.

In the pressing step P3, while a pressure is applied to the plurality of core sheets 1 between the support plate 17 and the runner plate 20 along the stacking direction, a hot mixture of fine particles of a magnetic material (hereinafter, referred to as magnetic powder) and a thermoplastic resin as a binder is fed from a filling device 25 through the filling holes 24 of the runner plate 20 to fill the magnet holes 4 of the plurality of core sheets 1.

The mixture of a magnetic powder and a resin binder is fed to fill the magnet holes 4 in such a manner that the mixture is ejected to the plurality of guide recessed portions 23 of the runner plate 20 under pressure simultaneously and thereby the mixture in each guide recessed portion 23 is supplied to the magnet holes 4 of the plurality of core sheets 1.

The mixture that has been applied is then cooled to form bonded magnets inside the magnet holes 4. The bonded magnets are magnetized after the manufacturing of the rotor R and function as permanent magnets. Furthermore, the mixture that has been applied is solidified upon cooling and holds the plurality of core sheets 1 in a stacked state. The mixture may involve a resin material that is solidified by chemical reaction upon heating or aging.

### [Method of manufacturing a rotary electric machine rotor: Extraction step P4]

Next, as illustrated in Fig. 10 and the column (P4) among the columns in Fig. 12, the extraction step P4 is a step in which the shaft-shaped portion 15 of the jig G is extracted from the plurality of core sheets 1 in a stacked state.

Because the adapters 10 have been engaged with the engagement groove portions 16 that are disposed linearly on the outer surface of the shaft-shaped portion 15 of the jig G, this process of extracting the shaft-shaped portion 15 is performed along the central axis X. The runner plate 20 is removed by this extracting operation, and the pair of adapters 10 are left on the inner surface of the shaft hole 2 of the stack of core sheets 1.

### [Method of manufacturing a rotary electric machine rotor: Attaching step P5]

Next, as illustrated in Fig. 10 and the column (P5) among the columns in Fig. 12, the attaching step P5 is a step in which a shaft 6 is inserted into the shaft holes 2, and the adapters 10 are engaged with a pair of engagement grooves 8 disposed in the shaft 6. In this manner, the shaft 6 and the rotor core Rc reach an engaged state via the pair of adapters 10, and the shaft 6 and the rotor core Rc reach an integrally rotatable state.

A rotary electric machine rotor R is manufactured by performing the stacking step P1, the alignment step P2, the pressing step P3, the extraction step P4, and the attaching step P5 in this order as described above.

The use of adapters 10 enables stacking of a plurality of core sheets 1 in a skew state while eliminating repeated operations of bringing the engagement portions, such as engagement protrusions, on the inner periphery of the shaft hole 2 of the core sheet 1 into engagement with grooves on the outer periphery of the jig each time the core sheet 1 is stacked. A second method of manufacturing a rotary electric machine rotor will be described below. This second rotor manufacturing method produces a rotary electric machine rotor having no adapters 10 while still offering the benefits described above.

### [Second method of manufacturing a rotary electric machine rotor]

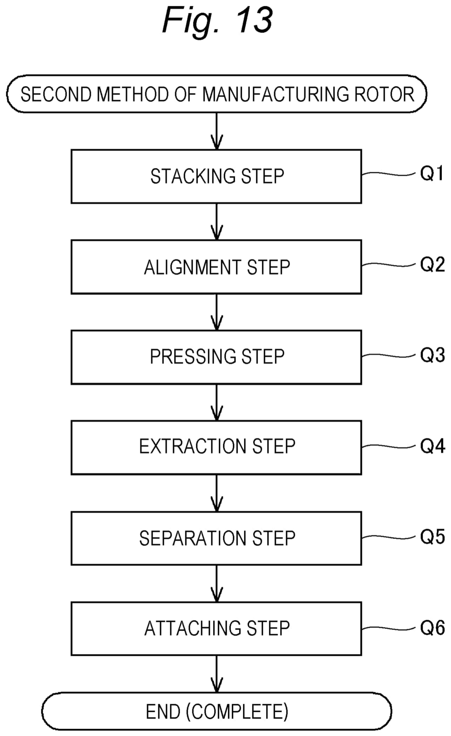

As illustrated in Fig. 13, a rotor R is manufactured by performing stacking step Q1, alignment step Q2, pressing step Q3, extraction step Q4, separation step Q5, and attaching step Q6 in this order.

The second rotor manufacturing method is the same as the rotor manufacturing method described earlier in that the stacking step Q1, the alignment step Q2, the pressing step Q3, and the extraction step Q4 sequentially performed in this order are equivalent to the stacking step P1, the alignment step P2, the pressing step P3, and the extraction step P4.

The second rotor manufacturing method, however, is partially different from the rotor manufacturing method described earlier in that the extraction step Q4 is followed by the separation step Q5 and the attaching step Q6 is performed next.

As illustrated in Fig. 10, the second method of manufacturing a rotary electric machine rotor R uses a jig G having a shaft-shaped portion 15, adapters 10, and a runner plate 20 having a disk shape. These members are of the same configurations as those described in the method of manufacturing a rotary electric machine rotor. The jig G, the adapters 10, and the runner plate 20 are denoted by the same reference numerals as those used in the first rotor manufacturing method. The stacking step Q1, the alignment step Q2, the pressing step Q3, and the extraction step Q4 that are common to the steps of manufacturing a rotor R will be described briefly based on their outlines.

### [Second method of manufacturing a rotary electric machine rotor: Stacking step Q1]

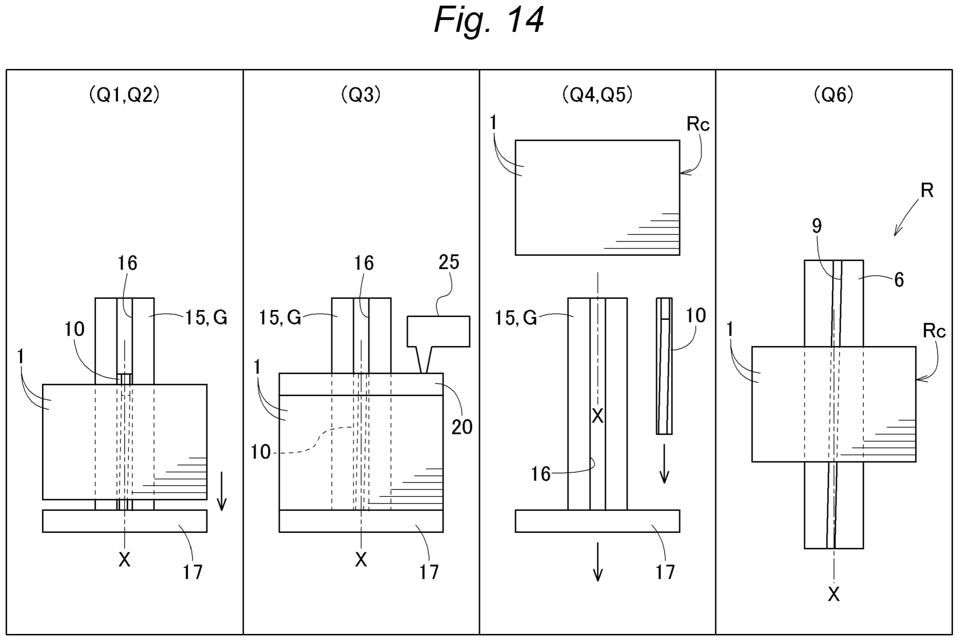

As illustrated in Fig. 10 and the column (Q1, Q2) among the columns in Fig. 14, the stacking step Q1 is a step in which a plurality of core sheets 1 each having a pair of engagement protruding portions 3 as engagement portions C on the inner periphery of a shaft hole 2 are stacked, and two adapters 10 are placed inside the shaft holes 2 so that the engagement protruding portions 3 of the respective core sheets 1 in a stacked state will be engaged with the engagement recessed portions 11a of the guide portions 11.

In the stacking step Q1, the engagement protruding portions 3 of the respective core sheets 1 in a stacked state are engaged with the engagement recessed portions 11a of the guide portions 11, and consequently a skew state is reached in which the plurality of core sheets 1 are continuously displaced in the rotational direction with respect to the central axis X of the shaft-shaped portion 15. Setting the plurality of core sheets 1 into such a skew state requires an action of a slight external force.

### [Second method of manufacturing a rotary electric machine rotor: Alignment step Q2]

As illustrated in Fig. 10 and the column (Q1, Q2) among the columns in Fig. 14, the alignment step Q2 is a step in which the shaft-shaped portion 15 of the jig G is inserted into the shaft holes 2 of the plurality of core sheets 1 in a stacked state. In this manner, relative movement is made along the central axis X while the adapter 10 is fitted to each of the pair of engagement groove portions 16, thereby fixing the skew state of the plurality of core sheets 1 in a stacked state.

### [Second method of manufacturing a rotary electric machine rotor: Pressing step Q3]

As illustrated in Fig. 10 and the column (Q3) among the columns in Fig. 14, the pressing step Q3 is a step in which a pressure is applied to the stack of core sheets 1 in the stacking direction via the runner plate 20, and thereby the plurality of core sheets 1 are integrated in a stacked state.

In the pressing step Q3, while a pressure is applied to the plurality of core sheets 1 between the support plate 17 and the runner plate 20 along the stacking direction, a hot mixture of a magnetic powder and a thermoplastic resin as a binder is fed from a filling device 25 through the filling holes 24 of the runner plate 20 to fill the magnet holes 4 of the plurality of core sheets 1 with the resin.

The mixture that has been applied is then cooled to form bonded magnets inside the magnet holes 4. The bonded magnets are magnetized later and function as permanent magnets. The mixture that has been applied is solidified upon cooling and holds the plurality of core sheets 1 in a stacked state.

### [Second method of manufacturing a rotary electric machine rotor: Extraction step Q4]

As illustrated in Fig. 10 and the column (Q4, Q5) among the columns in Fig. 14, the extraction step Q4 is a step in which the shaft-shaped portion 15 is extracted from the plurality of core sheets 1 in a stacked state, in other words, the stack of core sheets 1 is extracted together with the adapters 10 from the jig G, and the runner plate 20 is removed.

Because the adapters 10 have been engaged with the engagement groove portions 16 that are disposed linearly on the outer surface of the shaft-shaped portion 15 of the jig G, this extraction step Q4 extracts the shaft-shaped portion 15 by extracting the shaft-shaped portion 15 along the central axis X.

### [Second method of manufacturing a rotary electric machine rotor: Separation step Q5]

Next, as illustrated in the column (Q4, Q5) among the columns in Fig. 14, the adapters 10 are moved toward the radial center side inside the shaft holes 2 and are separated from the engagement protruding portions 3 (an example of the engagement portions C), and the adapters 10 separated are taken out from the shaft holes 2 to the outside.

Because the pair of adapters 10 have been engaged with the plurality of engagement protruding portions 3 through the engagement recessed portions 11a of the respective guide portions 11, the adapters 10 are separated by being moved toward the radial center side of the shaft holes 2.

As already described (Method of manufacturing a rotary electric machine rotor: Adapters), the adapter 10 is designed such that the engagement recessed portion 11a, at a position where the maximum twist angle θ is reached, has a draft α at an angle equal to the twist angle on its inner surface opposite to the skew direction so that the engagement recessed portion 11a will be separable from the engagement protruding portion 3 at the position of the maximum twist angle θ.

As a result of this design, the adapter 10, by being moved inside the shaft holes 2 in the radially inward direction of the shaft holes 2, can be separated from the engagement protruding portions 3 without suffering a strong contact of the engagement protruding portions 3 with the engagement recessed portion 11a. Thus, the adapter 10 can be separated easily.

As described above, a rotary electric machine rotor core Rc in which a plurality of core sheets 1 are stacked in a skew state can be produced by performing the stacking step Q1, the alignment step Q2, the pressing step Q3, the extraction step Q4, and the separation step Q5 in this order.

### [Second method of manufacturing a rotary electric machine rotor: Attaching step Q6]

As illustrated in the column (Q6) among the columns in Fig. 14, the attaching step Q6 is a step in which a shaft 6 is inserted into and fixed to the shaft hole 2 of the rotor core Rc including the plurality of core sheets 1 integrated in a stacked state.

Because the adapters 10 have been removed from the rotor core Rc, this attaching step Q6 integrates the shaft 6 with the rotor core Rc through spiral fitting grooves 9 disposed on the outer peripheral surface of the shaft 6 that are engageable with the engagement protruding portions 3 disposed on the inner peripheral surface of the shaft holes 2.

That is, the second method of manufacturing a rotary electric machine rotor is such that a rotor core Rc is fabricated using the adapters 10, subsequently the adapters 10 are removed from the rotor core Rc, and a shaft 6 is fixed to the rotor core Rc without using the adapters 10.

### [Functions and effects of the embodiments]

As described above, a plurality of core sheets 1 are stacked using the jig G and the adapters 10 that are engageable with the engagement groove portions 16 of the shaft-shaped portion 15 of the jig G and are movable along the central axis X of the shaft-shaped portion 15. In the stacking, the engagement protruding portions 3 disposed in the core sheets 1 are engaged with the guide portions 11 (the engagement recessed portions 11a) of the adapters 10. In this manner, the plurality of core sheets 1 can be stacked in a skew state, namely, can be rotated each time of stacking by a required angle in a short time.

In the production of a rotor R having a plurality of core sheets 1 stacked in a skew state, as described above, the use of adapters 10 avoids the trouble of, for example, inserting a jig or the like through the core sheet 1 after each core sheet 1 is set into an appropriately rotated posture even in the case where the core sheets 1 that are used are not of different shapes.

A rotor R may be produced using the jig G and the adapters 10 in such a manner that the stacking step P1, the alignment step P2, and the pressing step P3 are followed by the extraction step P4 in which the shaft-shaped portion 15 of the jig G is extracted while leaving the adapters 10 inside the rotor core Rc, and, after the shaft-shaped portion 15 has been extracted, a shaft 6 is inserted into the shaft hole 2 in the attaching step P5. In this production mode, the shaft 6 that is used can be selected in accordance with the specification.

In another production mode, a rotor R may be produced using the jig G and the adapters 10 in such a manner that the stacking step Q1, the alignment step Q2, and the pressing step Q3 are followed by the extraction step Q4 in which the shaft-shaped portion 15 of the jig G is extracted from the rotor core Rc, and are further followed by the separation step Q5 in which the adapters 10 are separated, and thereafter a shaft 6 is inserted into the shaft hole 2 in the attaching step Q6. In this production mode, high-torque driving is realized by, for example, engaging the engagement protruding portions 3 of the plurality of core sheets 1 with spiral grooves disposed on the outer periphery of the shaft 6.

The engagement protruding portions 3 are disposed on the inner periphery of the shaft hole 2 of the core sheet 1, a plurality of core sheets 1 are stacked in a skew state, and a draft α is provided in the engagement recessed portion 11a of the adapter 10. These configurations facilitate the separation of the engagement recessed portions 11a of the adapters 10 from the engagement protruding portions 3 on the inner surface of the shaft hole 2 of the rotor core Rc.

Furthermore, the shape of the side surface 3s of the engagement protruding portion 3 on the side opposite to the skew direction is spread to the same extent as the twist angle so that the shape will follow the inner surface of the inclined second inner wall surface W2a of the engagement recessed portion 11a. This configuration enables surface contact between the side surface 3s of the engagement protruding portion 3 and the inclined second inner wall surface W2a of the engagement recessed portion 11a. As a result, the rotor R can benefit from facilitated transmission of a force from the shaft 6 to the rotor core Rc via the adapters 10, and can also benefit from reduced load at a contact between the engagement protruding portion 3 and the engagement recessed portion 11a. In the rotor R manufacturing method, on the other hand, this design can reduce the load at a contact between the engagement protruding portion 3 and the engagement recessed portion 11a and can suppress the occurrence of misalignment between the engagement protruding portion 3 and the engagement recessed portion 11a.

As a result of a plurality of core sheets 1 being stacked in a skew state, the magnet holes 4 formed in each of the plurality of core sheets 1 are also skewed. The magnet holes 4 formed in a skew state as described above are filled with a mixture of a magnetic powder and a resin binder. After the bonded magnets are magnetized to form permanent magnets integral with the rotor core Rc, the rotor core Rc, even when used in a motor, realizes smooth rotation with reduced influence of cogging torque.

### [Additional embodiments]

The present disclosure may be configured as follows in addition to the embodiments described above (those having the same functions as in the embodiments are denoted by the same numbers and reference numerals as those in the embodiments).

The engagement portions C may be engagement recessed portions that are recessed radially outward from the inner periphery of the shaft hole 2 of the core sheet 1.

When the engagement portions C are such engagement recessed portions, the adapters 10 have an engagement protruding portion 3 having a structure in which the guide portion 11 protrudes outward.

(b) While the stack has been illustrated as being in a skew state in which a plurality of core sheets 1 are displaced in one rotational direction, the plurality of core sheets 1 may be stacked in a skew state in which the core sheets 1 are displaced in one rotational direction by a predetermined angle from one side in the stacking direction to the middle in the stacking direction and are displaced in the reverse rotational direction by a predetermined angle from the middle in the stacking direction to the other side in the stacking direction. Furthermore, the plurality of core sheets 1 may be stacked in a skew state in which the core sheets 1 are displaced so that the rotational direction is reversed at a plurality of locations in the stacking direction. In this case, the guide portions 11 may have a zigzag shape that is a curve, such as a secondary curve or a sine curve, or a combination of lines, depending on the shape of the ridge portion including the plurality of engagement protruding portions 3.

(c) In order to integrate the plurality of core sheets 1 in a stacked state, for example, a connecting member, such as a bolt-like member or a rivet-like member, may be used that penetrates through the plurality of core sheets 1 in the stacking direction.

Note that the configurations disclosed in the above embodiments (including the additional embodiments, the same applying hereinafter) can be applied in combination with configurations disclosed in other embodiments as long as there is no contradiction. The embodiments disclosed in the present specification are illustrative, and the embodiments of the present disclosure are not limited thereto and can be appropriately modified without departing from the object of the present disclosure.

In the above-described embodiments, the following configurations are conceivable.
(1) A rotary electric machine rotor including a rotor core Rc including a stack of a plurality of core sheets 1 each having a shaft hole 2 at a center; a shaft 6 inserted through the shaft holes 2; and an adapter 10 disposed between the shaft 6 and the rotor core Rc and engaged with both the shaft 6 and the rotor core Rc, wherein the plurality of core sheets 1 stacked have, on an inner peripheral surface of the core sheets 1, an engagement portion C extending from one end side to the other end side in an axial direction of the shaft 6; the adapter 10 has, on an outer peripheral surface of the adapter 10, a guide portion 11 extending from one end side to the other end side in the axial direction of the shaft 6; one of the engagement portion C and the guide portion 11 is an engagement recessed portion 11a recessed along a radial direction of the shaft 6, and the other is an engagement protruding portion 3 protruding along the radial direction of the shaft 6 and engaged with the engagement recessed portion 11a; the engagement recessed portion 11a and the engagement protruding portion 3 have a shape twisted at a predetermined twist angle θ along a circumferential direction of the shaft 6; and the adapter 10 is engaged with the shaft 6 detachably from the shaft 6 along the axial direction of the shaft 6.

According to the above configuration, the adapter 10 is detachable along the axial direction X of the shaft 6. When the rotor R is to be disassembled, the rotor core Rc can be separated together with the adapter 10 from the shaft 6 simply by moving the adapter 10 along the axial direction X of the shaft 6. Furthermore, the rotor core Rc and the adapter 10 can be separated from each other by removing the adapter 10 from the rotor core Rc inward in the radial direction of the shaft holes 2. The rotor R configured as described above can be disassembled easily. Furthermore, at the time of fabrication of the rotor core Rc according to the above configuration, the plurality of core sheets 1 are stacked, the guide portion 11 of the adapter 10 is engaged with the engagement portions C on the inner peripheral surface of the respective shaft holes 2, the shaft-shaped portion 15 is inserted into the inner periphery of the stack of core sheets 1, the adapter 10 is engaged with the shaft-shaped portion 15, and the engagement portions C of the shaft holes 2 are engaged with the guide portion 11 of the adapter 10. In this manner, the plurality of core sheets 1 can be brought into a skew state in which the core sheets 1 are twisted at a twist angle θ along the circumferential direction. That is, the engagement of the adapter 10 with the jig G determines the posture of the adapter 10 with reference to the axial direction of the shaft-shaped portion 15 of the jig G, and determines the twist angle θ in the circumferential direction of each of the plurality of core sheets 1 engaged, via the engagement portion C, with the guide portion 11 of the adapter 10. That is, the use of adapter 10 in the fabrication of the rotor core Rc enables fixing of a plurality of core sheets 1 in a skew state while eliminating, for example, repeated operations of bringing the engagement portion, such as an engagement protrusion, on the inner periphery of the shaft hole 2 of the core sheet 1 into engagement with a groove on the outer periphery of the jig G each time the core sheet 1 is stacked. According to the above configuration, the rotary electric machine rotor R that has a rotor core Rc in which a plurality of core sheets 1 are stacked in a skew state can be manufactured in a small number of steps and can be disassembled easily.

(2) The rotary electric machine rotor according to (1) is favorably such that the engagement recessed portion 11a, at a position where a maximum twist angle θ is reached, has a draft α at an angle equal to the twist angle θ on an inner surface of the engagement recessed portion 11a opposite to a skew direction so that the engagement recessed portion 11a is separable from the engagement protruding portion 3.

When the engagement protruding portions 3 are disposed on the inner periphery of the shaft hole 2 of the rotor core Rc including the stack of a plurality of core sheets 1, the engagement protruding portions 3 have an inclined posture with respect to the central axis X. The engagement recessed portion 11a of the adapter 10 will have a strong contact with part of such engagement protruding portions 3 where the maximum twist angle θ is reached and the adapter 10 will not be released easily. However, the above configuration can eliminate this inconvenience.

(3) The rotary electric machine rotor according to (2) is favorably such that a side surface 3s of the engagement protruding portion 3 on a side opposite to the skew direction has a shape that is spread to the same extent as the twist angle so that the shape follows the inner surface of the engagement recessed portion 11a opposite to the skew direction.

This configuration enables surface contact between the engagement portion C and the guide portion 11, thus facilitating the transmission of a force from the shaft 6 to the rotor core Rc via the adapter 10.

(4) The rotary electric machine rotor according to any one of (1) to (3) is favorably such that the rotor core Rc has a plurality of magnet holes 4 each having a shape twisted at a predetermined twist angle along the circumferential direction, and the magnet holes 4 each accommodate a bonded magnet formed by filling the magnet hole 4 with a mixture of a fluid binder and a magnetic powder followed by curing.

According to the above configuration, the plurality of core sheets 1 can be integrated without using an adhesive or without using a screw or other member for creating a tightly integrated unit. Because the plurality of core sheets 1 have been stacked in a skew state, the plurality of magnets are also formed in a spiral shape that is displaced in the circumferential direction of the core sheets 1. Furthermore, the cogging torque can be reduced.

(5) A method of manufacturing a rotary electric machine rotor using a jig G having a shaft-shaped portion 15, and an adapter 10 engageable with the shaft-shaped portion 15 detachably along an axial direction of the shaft-shaped portion 15, the adapter 10 being such that the adapter 10 has a guide portion 11 disposed on an outer peripheral surface, the guide portion 11 is one of an engagement recessed portion 11a recessed along a radial direction of the shaft-shaped portion 15 or an engagement protruding portion 3 protruding along the radial direction of the shaft-shaped portion 15, and the engagement recessed portion 11a and the engagement protruding portion 3 each have a shape twisted at a predetermined twist angle along a circumferential direction of the shaft-shaped portion 15, the method including: a stacking step P1 in which a plurality of core sheets 1 are stacked, the core sheets 1 each having a shaft hole 2 at a center and either a protruding portion or a recessed portion on an inner periphery of the shaft hole 2, the protruding portion and the recessed portion being engageable with the guide portion 11, and the plurality of core sheets 1 are guided by the guide portion 11 so that the protruding portions or the recessed portions of the respective core sheets 1 in a stacked state are engaged with the guide portion 11 and so that the plurality of core sheets 1 are continuously displaced in a rotational direction with respect to a central axis X of the shaft-shaped portion 15, and thereby the adapter 10 is placed inside the shaft holes 2; an alignment step P2 in which the shaft-shaped portion 15 is inserted into the shaft holes 2 of the plurality of core sheets 1 in a stacked state while engaging the adapter 10 with the shaft-shaped portion 15, and thereby the plurality of core sheets 1 and the adapter 10 are moved along the axial direction of the shaft-shaped portion 15; a pressing step P3 of applying a pressure to the stack of core sheets 1 along a stacking direction; an extraction step P4 of extracting the shaft-shaped portion 15 from the shaft holes 2 after the pressing step P3; and an attaching step P5 of inserting a shaft 6 into the shaft holes 2 after the extraction step P4 while engaging the shaft 6 with the adapter 10.

According to the above method, in the stacking step P1, the adapter 10 is inserted into the shaft holes 2 of the plurality of core sheets 1 stacked, and the engagement portions C of the plurality of core sheets 1 are engaged with the guide portion 11 of the adapter 10. In this manner, the guide portion 11 guides the plurality of core sheets 1 into a stack with a skew state in which the core sheets 1 are continuously displaced in the rotational direction with respect to the central axis X of the shaft-shaped portion 15. In the next alignment step P2, the shaft-shaped portion 15 is inserted into the shaft holes 2 of the core sheets 1 while engaging the adapter 10 with the shaft-shaped portion 15, and thereby the plurality of core sheets 1 and the adapter 10 are arranged along the axial direction of the shaft-shaped portion 15. This determines the posture of the adapter 10 with respect to the jig G, and the plurality of core sheets 1 can be held in a skew state. In the next pressing step P3, the plurality of core sheets 1 in a stacked state can be integrated into a unit that is tight in the stacking direction. In the next extraction step P4, the shaft-shaped portion 15 is extracted from the plurality of core sheets 1 in a fixed state along the axial direction X of the shaft-shaped portion 15. In the subsequent attaching step P5, the shaft 6 is engaged with the adapter 10. A rotary electric machine rotor that has a rotor core Rc integrally rotatable with the shaft 6 is thus obtained. As described above, the use of adapter 10 in the fabrication of the rotor core Rc enables fixing of a plurality of core sheets 1 in a skew state while eliminating, for example, repeated operations of bringing the engagement portion, such as an engagement protrusion, on the inner periphery of the shaft hole 2 of the core sheet 1 into engagement with a groove on the outer periphery of the jig G each time the core sheet 1 is stacked. Thus, the manufacturing method configured as described above can produce, with a small number of steps, a rotary electric machine rotor R that has a rotor core Rc in which a plurality of core sheets 1 are stacked in a skew state.

(6) A method of manufacturing a rotary electric machine rotor using a jig G having a shaft-shaped portion 15, and an adapter 10 engageable with the shaft-shaped portion 15 detachably along an axial direction of the shaft-shaped portion 15, the adapter 10 being such that the adapter 10 has a guide portion 11 disposed on an outer peripheral surface, the guide portion 11 is one of an engagement recessed portion 11a recessed along a radial direction of the shaft-shaped portion 15 or an engagement protruding portion 3 protruding along the radial direction of the shaft-shaped portion 15, and the engagement recessed portion 11a and the engagement protruding portion 3 each have a shape twisted at a predetermined twist angle along a circumferential direction of the shaft-shaped portion 15, the method including: a stacking step Q1 in which a plurality of core sheets 1 are stacked, the core sheets 1 each having a shaft hole 2 at a center and either a protruding portion or a recessed portion on an inner periphery of the shaft hole 2, the protruding portion and the recessed portion being engageable with the guide portion 11, and the plurality of core sheets 1 are guided by the guide portion 11 so that the protruding portions or the recessed portions of the respective core sheets 1 in a stacked state are engaged with the guide portion 11 and so that the plurality of core sheets 1 are continuously displaced in a rotational direction with respect to a central axis X of the shaft-shaped portion 15, and thereby the adapter 10 is placed inside the shaft holes 2; an alignment step Q2 in which the shaft-shaped portion 15 is inserted into the shaft holes 2 of the plurality of core sheets 1 in a stacked state while engaging the adapter 10 with the shaft-shaped portion 15, and thereby the plurality of core sheets 1 and the adapter 10 are moved along the axial direction of the shaft-shaped portion 15; a pressing step Q3 of applying a pressure to the stack of core sheets 1 along a stacking direction; an extraction step Q4 of extracting the shaft-shaped portion 15 from the shaft holes 2 after the pressing step Q3; a separation step Q5 in which the adapter 10 after the extraction step Q4 is moved toward a radial center side of the shaft holes 2 and is thereby separated from the protruding portions or the recessed portions of the plurality of core sheets 1, and the adapter 10 is taken out from the shaft holes 2 to outside; and an attaching step Q6 of inserting a shaft 6 into the shaft holes 2 after the separation step Q5.

According to the above method, in the stacking step Q1, the adapter 10 is inserted into the shaft holes 2 of the plurality of core sheets 1 stacked, and the engagement portions C of the plurality of core sheets 1 are engaged with the guide portion 11 of the adapter 10. In this manner, the guide portion 11 guides the plurality of core sheets 1 into a stack with a skew state in which the core sheets 1 are continuously displaced in the rotational direction with respect to the central axis X of the shaft-shaped portion 15. In the next alignment step Q2, the shaft-shaped portion 15 is inserted into the shaft holes 2 of the core sheets 1 while engaging the adapter 10 with the shaft-shaped portion 15, and thereby the plurality of core sheets 1 and the adapter 10 are arranged along the axial direction of the shaft-shaped portion 15. This determines the posture of the adapter 10 with respect to the jig G and allows the plurality of core sheets 1 to be held in a skew state. In the next pressing step Q3, the plurality of core sheets 1 in a stacked state can be integrated into a unit that is tight in the stacking direction. The shaft-shaped portion 15 is extracted from the shaft holes 2 in the next extraction step Q4. In the separation step Q5, the adapter 10 is removed from the shaft holes 2 and is taken to the outside. In the attaching step Q6, the shaft 6 is inserted into the shaft holes 2. A rotary electric machine rotor having a rotor core Rc integrally rotatable with the shaft 6 is thus obtained. As described above, the use of adapter 10 in the fabrication of the rotor core Rc enables fixing of a plurality of core sheets 1 in a skew state while eliminating, for example, repeated operations of bringing the engagement portion, such as an engagement protrusion, on the inner periphery of the shaft hole 2 of the core sheet 1 into engagement with a groove on the outer periphery of the jig G each time the core sheet 1 is stacked. Thus, the manufacturing method configured as described above can produce, with a small number of steps, a rotary electric machine rotor R that has a rotor core Rc in which a plurality of core sheets 1 are stacked in a skew state.

The present disclosure can be utilized for a rotary electric machine rotor and a method of manufacturing a rotary electric machine rotor.

It is explicitly stated that all features disclosed in the description and/or the claims are intended to be disclosed separately and independently from each other for the purpose of original disclosure as well as for the purpose of restricting the claimed invention independent of the composition of the features in the embodiments and/or the claims. It is explicitly stated that all value ranges or indications of groups of entities disclose every possible intermediate value or intermediate entity for the purpose of original disclosure as well as for the purpose of restricting the claimed invention, in particular as limits of value ranges.

## Claims

1. A rotary electric machine rotor (R) comprising:
a rotor core (Rc) including a stack of a plurality of core sheets (1) each having a shaft hole (2) at a center;
a shaft (6) inserted through the shaft holes (2); and
an adapter (10) disposed between the shaft (6) and the rotor core (Rc) and engaged with both the shaft (6) and the rotor core (Rc), wherein
the plurality of core sheets (1) stacked have, on an inner peripheral surface of the core sheets (1), an engagement portion (C) extending from one end side to other end side in an axial direction of the shaft (6),
the adapter (10) has, on an outer peripheral surface of the adapter (10), a guide portion (11) extending from one end side to the other end side in the axial direction of the shaft (6),
one of the engagement portion (C) and the guide portion (11) is an engagement recessed portion (11a) recessed along a radial direction of the shaft (6), and the other is an engagement protruding portion (3) protruding along the radial direction of the shaft (6) and engaged with the engagement recessed portion (11a),
the engagement recessed portion (11a) and the engagement protruding portion (3) have a shape twisted at a predetermined twist angle (θ) along a circumferential direction of the shaft (6), and
the adapter (10) is engaged with the shaft (6) detachably from the shaft (6) along the axial direction of the shaft (6).

2. The rotary electric machine rotor (R) according to Claim 1, wherein the engagement recessed portion (11a), at a position where a maximum twist angle (θ) is reached, has a draft (α) at an angle equal to the twist angle (θ) on an inner surface of the engagement recessed portion (11a) opposite to a skew direction so that the engagement recessed portion (11a) is separable from the engagement protruding portion (3).

3. The rotary electric machine rotor (R) according to Claim 2, wherein a side surface (3s) of the engagement protruding portion (3) on a side opposite to the skew direction has a shape that is spread to the same extent as the twist angle (θ) so that the shape follows the inner surface of the engagement recessed portion (11a) opposite to the skew direction.

4. The rotary electric machine rotor (R) according to any one of Claims 1 to 3, wherein the rotor core (Rc) has a plurality of magnet holes (4) each having a shape twisted at a predetermined twist angle (θ) along the circumferential direction, and
the magnet holes (4) each accommodate a bonded magnet formed by filling the magnet hole (4) with a mixture of a fluid binder and a magnetic powder followed by curing.

5. A method of manufacturing a rotary electric machine rotor (R) using a jig (G) having a shaft-shaped portion (15), and an adapter (10) engageable with the shaft-shaped portion (15) detachably along an axial direction of the shaft-shaped portion (15), the adapter (10) being such that the adapter (10) has a guide portion (11) disposed on an outer peripheral surface, the guide portion (11) is one of an engagement recessed portion (11a) recessed along a radial direction of the shaft-shaped portion (15) or an engagement protruding portion (3) protruding along the radial direction of the shaft-shaped portion (15), and the engagement recessed portion (11a) and the engagement protruding portion (3) each have a shape twisted at a predetermined twist angle (θ) along a circumferential direction of the shaft-shaped portion (15), the method comprising:
a stacking step (P1) in which a plurality of core sheets (1) are stacked, the core sheets (1) each having a shaft hole (2) at a center and either a protruding portion or a recessed portion on an inner periphery of the shaft hole (2), the protruding portion and the recessed portion being engageable with the guide portion (11), and the plurality of core sheets (1) are guided by the guide portion (11) so that the protruding portions or the recessed portions of the respective core sheets (1) in a stacked state are engaged with the guide portion (11) and so that the plurality of core sheets (1) are continuously displaced in a rotational direction with respect to a central axis (X) of the shaft-shaped portion (15), and thereby the adapter (10) is placed inside the shaft holes (2);
an alignment step (P2) in which the shaft-shaped portion (15) is inserted into the shaft holes (2) of the plurality of core sheets (1) in a stacked state while engaging the adapter (10) with the shaft-shaped portion (15), and thereby the plurality of core sheets (1) and the adapter (10) are moved along the axial direction of the shaft-shaped portion (15);
a pressing step (P3) of applying a pressure to the stack of core sheets (1) along a stacking direction;
an extraction step (P4) of extracting the shaft-shaped portion (15) from the shaft holes (2) after the pressing step (P3); and
an attaching step (P5) of inserting a shaft (6) into the shaft holes (2) after the extraction step (P4) while engaging the shaft (6) with the adapter (10).

6. A method of manufacturing a rotary electric machine rotor (R) using a jig (G) having a shaft-shaped portion (15), and an adapter (10) engageable with the shaft-shaped portion (15) detachably along an axial direction of the shaft-shaped portion (15), the adapter (10) being such that the adapter (10) has a guide portion (11) disposed on an outer peripheral surface, the guide portion (11) is one of an engagement recessed portion (11a) recessed along a radial direction of the shaft-shaped portion (15) or an engagement protruding portion (3) protruding along the radial direction of the shaft-shaped portion (15), and the engagement recessed portion (11a) and the engagement protruding portion (3) each have a shape twisted at a predetermined twist angle (θ) along a circumferential direction of the shaft-shaped portion (15), the method comprising:
a stacking step (Q1) in which a plurality of core sheets (1) are stacked, the core sheets (1) each having a shaft hole (2) at a center and either a protruding portion or a recessed portion on an inner periphery of the shaft hole (2), the protruding portion and the recessed portion being engageable with the guide portion (11), and the plurality of core sheets (1) are guided by the guide portion (11) so that the protruding portions or the recessed portions of the respective core sheets (1) in a stacked state are engaged with the guide portion (11) and so that the plurality of core sheets (1) are continuously displaced in a rotational direction with respect to a central axis (X) of the shaft-shaped portion (15), and thereby the adapter (10) is placed inside the shaft holes (2);
an alignment step (Q2) in which the shaft-shaped portion (15) is inserted into the shaft holes (2) of the plurality of core sheets (1) in a stacked state while engaging the adapter (10) with the shaft-shaped portion (15), and thereby the plurality of core sheets (1) and the adapter (10) are moved along the axial direction of the shaft-shaped portion (15);
a pressing step (Q3) of applying a pressure to the stack of core sheets (1) along a stacking direction;
an extraction step (Q4) of extracting the shaft-shaped portion (15) from the shaft holes (2) after the pressing step (Q3);
a separation step (Q5) in which the adapter (10) after the extraction step (Q4) is moved toward a radial center side of the shaft holes (2) and is thereby separated from the protruding portions or the recessed portions of the plurality of core sheets (1), and the adapter (10) is taken out from the shaft holes (2) to outside; and
an attaching step (Q6) of inserting a shaft (6) into the shaft holes (2) after the separation step (Q5).
